# FASCICULE DE BREVET EUROPEEN

(11) **EP 0 443 961 B1**
(45) Date de publication et mention de la délivrance du brevet: **13.04.1994**
(21) Numéro de dépôt: 91400487.4
(22) Date de dépôt: 22.02.1991
(51) Int. Cl.: B29B 17/02, B30B 9/18

(54) **Dispostif de pré-traitement de déchets plastiques avant recyclage**
Vorrichtung zur Vorbehandlung von Kunststoffabfällen vor ihrer Wiederaufbereitung
Device for plastic waste pre-treatment before its recycling

(30) Priorité: 23.02.1990 FR 9002387
(43) Date de publication de la demande: 28.08.1991
(73) Titulaire: INSTITUT FRANCAIS DU PETROLE, 92502 Rueil-Malmaison (FR); LUTZ ET KREMPP INDUSTRIES (L.K.I.), F-91200 Athis-Mons (FR)
(72) Inventeur: Krempp, Olivier, F-75017 Paris (FR); Renot, André, F-95130 Franconville (FR)

(56) Documents cités:
- EP-A- 0 003 806
- WO-A-85/04837
- FR-A- 2 394 333
- GB-A- 2 198 662
- US-A- 4 665 816

## Description

L'invention concerne un dispositif de pré-traitement de déchets plastiques avant recyclage. Le dispositif selon l'invention est particulièrement adapté à séparer des déchets plastiques d'autres substances ou matières auxquelles ils peuvent être mélangés, et à délivrer ces déchets lavés et séchés.

Beaucoup de déchets plastiques d'origine industrielle, agricole ou domestique se présentent souvent mélangés à d'autres matériaux solides, salis par contact avec des substances diverses ou bien encore recouverts de dépôts, d'enduits à récupérer ou à éliminer au moins partiellement.

C'est le cas pour nombre d'objets ou de films plastiques ayant servi pour le conditionnement, l'emballage ou la protection de produits : films, récipients en polyéthylène ou en P.V.C. C'est le cas aussi par exemple des pellicules photo ou les plaques de radiographie dont on souhaite récupérer les dépôts sensibles. C'est encore le cas par exemple des films recouverts ou enduits d'autres substances qu'il s'agit d'éliminer au moins en partie avant leur traitement etc.

Le réemploi éventuel de ces déchets ou leur recyclage passe d'abord par un pré-traitement comportant un broyage ou sectionnement et une séparation totale ou partielle des produits ou substances étrangères par lavage et séchage de manière à obtenir des déchets recyclables.

Par la demande de brevet WO 85/04837, on connait un dispositif pour transporter et compacter des déchets qui comporte un guide tubulaire à l'intérieur duquel un élément d'entraînement hélicoïdal peut tourner sous l'action de moyens moteurs, des moyens de chargement des déchets vers une première extrémité du guide tubulaire et des moyens pour exercer une contrepression de freinage vers l'extrémité opposée du guide.

Par la demande de brevet GB 2 198 662 également, on connait un système de traitement de déchets comportant un ensemble de séparation pour trier les déchets plastiques et un dispositif de lavage comprenant un tambour d'égouttage tournant.

D'autres dispositifs capables de traiter des déchets plastiques sont décrits aussi dans les demandes de brevet européens publiées No. 94 282 ou 310 947 ainsi que dans les demandes de brevet francais publiées No. 2 573 340 ou 2 599 279.

Souvent, le traitement des déchets plastiques est réalisé par des installations très importantes incluant beaucoup de sous-ensembles fonctionnels qui doivent être installés à poste fixe ce qui implique souvent une centralisation des déchets à traiter, et qui néccessitent un personnel spécialisé. Le prix de revient et les coûts d'utilisation de telles installations sont généralement très importants. Ce type d'installations, de par son importance et son coût d'exploitation, ne convient pas pour de nombreuses applications.

Le problème à résoudre très souvent pour le traitement des déchets plastiques, est d'obtenir un dispositif fiable capable d'un débit de traitement important et qui
- soit économiquement rentable,
- fonctionne avec une quantité de liquide de lavage à taux de renouvellement faible de manière à éviter des problèmes de pollution ou faciliter la récupération éventuelle de certaines substances séparées par le lavage,
- soit suffisamment compact pour pouvoir être transporté facilement sur des lieux d'accumulation de déchets, et
- dispose d'organes de conduite suffisamment élaborés pour fonctionner sans difficulté et être servi de préférence par un personnel non spécialisé.

Le dispositif selon l'invention permet de réaliser le traitement de déchets plastiques dans des conditions de coût, de mobilité, de facilité de mise en oeuvre indispensables pour de nombreuses applications. Il comporte
- une cuve remplie de liquide dans laquelle sont introduits les déchets plastiques à traiter,
- des moyens de pompage incluant une pompe de lavage, et
- un système séparateur communiquant avec la pompe de lavage, pour séparer du liquide les déchets lavés, incluant un tambour d'égouttage.

Il est caractérisé en ce qu'il comporte des moyens d'assèchement par compression comprenant une vis presseuse entraînée en rotation disposée le long d'un canal d'accumulation de section sensiblement constante, et moins une pièce de freinage des déchets qui est engagée dans le canal d'accumulation par une ouverture radiale ménagée dans la paroi de celui-ci, ladite pièce de freinage étant associée à un moyen élastique réglable pour exercer sur elle une force régulée pour faire varier la section de passage des déchets dans le canal d'accumulation et ajuster la force de compression exercée sur les déchets.

Le dispositif peut comporter avantageusement en outre des moyens diviseurs pour désagréger les déchets issus des moyens d'assèchement.

Les moyens pour désagréger les déchets issus des moyens d'assèchement comportent par exemple au moins un couteau solidaire en rotation de la vis presseuse.

Celle-ci peut être à pas variable, le pas étant plus grand du côté de l'entrée de la vis que vers la ou les pièces mobiles de freinage.

Suivant un mode de réalisation, le dispositif comporte aussi des moyens pneumatiques de séchage recueillant les déchets issus des moyens diviseurs.

Suivant un mode de réalisation, le dispositif selon l'invention comporte un réservoir contenant du liquide, et des moyens d'introduction des déchets dans la cuve comprenant une trémie de chargement et un conduit communiquant avec la base de la cuve, une voie de communication entre le réservoir et la trémie permettant l'entraînement par le liquide des déchets plastiques.

Des récepteurs peuvent être employés pour canaliser le liquide sortant du système séparateur.

Suivant un mode de réalisation, le canal d'accumulation est pourvu d'éléments saillants disposés parallèlement à son axe pour empêcher la rotation des déchets accumulés;

Quand le morcelage des déchets plastiques est insuffisant, le dispositif peut comporter un ensemble de pré-broyage des déchets plastiques et des moyens pour relier ledit ensemble avec la cuve remplie de liquide.

Le dispositif peut encore comporter un moyen de traitement du liquide pour séparer du liquide des substances détachées des déchets plastiques par lavage et des moyens de pompage pour recycler le liquide issu du moyen de traitement.

Le dispositif selon l'invention comporte avantageusement un ensemble de commande programmé pour conduire et contrôler le processus de traitement, cet ensemble de commande comportant un processeur de traitement, un bloc d'alimentation électrique pour délivrer aux moyens de pompage, aux moyens d'égouttage et aux moyens d'assèchement des courants électriques d'activation, le processeur de traitement étant connecté à un moyen de détection du niveau liquide, à un capteur de température associé aux moyens d'assèchement et à des capteurs d'état pour la détection de paramètres de fonctionnement des différents éléments constitutifs du dispositif.

Le dispositif pouvant se présenter sous la forme d'un ensemble monobloc et relativement compact, peut être transporté facilement sur un lieu d'exploitation. L'utilisation des moyens d'assèchement à vis presseuse et de moyens diviseurs permet au dispositif de délivrer des déchets presque secs et donc d'économiser beaucoup d'énergie dans la phase de séchage. L'ensemble de commande étant apte à piloter les différentes séquences de fonctionnement, de contrôle en liaison avec des capteurs d'état ou de mesure, le fonctionnement du dispositif selon l'invention est largement automatisé.

D'autres caractéristiques et avantages du dispositif selon l'invention apparaîtront mieux à la lecture de la description ci-après d'un mode de réalisation décrit à titre d'exemple non limitatif, en se référant aux dessins annexés où :
- la Fig.1 montre une vue d'ensemble schématique du dispositif;
- la fig.2 montre schématiquement les circulations des déchets et du liquide dans les différents éléments du dispositif;
- la Fig.3 montre les moyens d'assèchement avec vis presseuse et pièces mobiles de freinage;

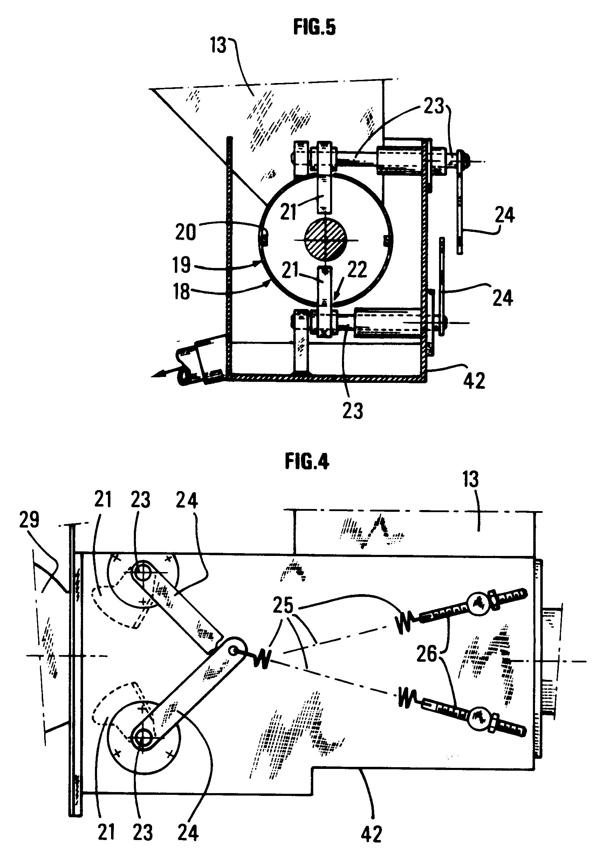

- la Fig.4 montre les moyens ressorts associés aux pièces mobiles;
- la Fig.5 montre le canal d'accumulation des moyens d'assèchement avec les éléments saillants anti-rotation; et
- La Fig.6 est un schéma fonctionnel de l'ensemble de commande assurant la coordination du fonctionnement.

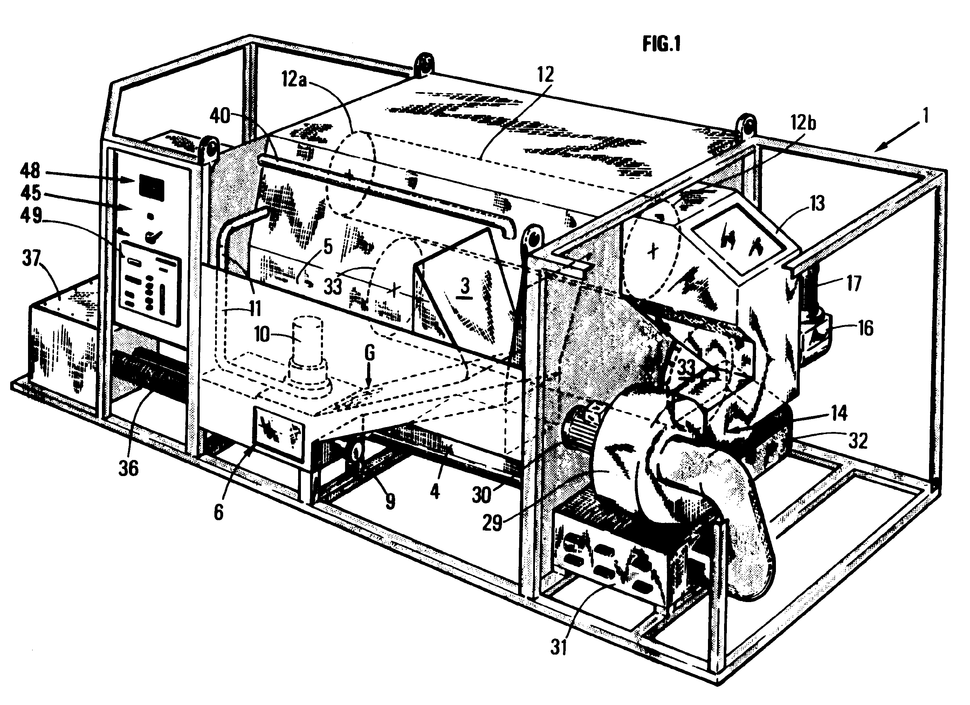

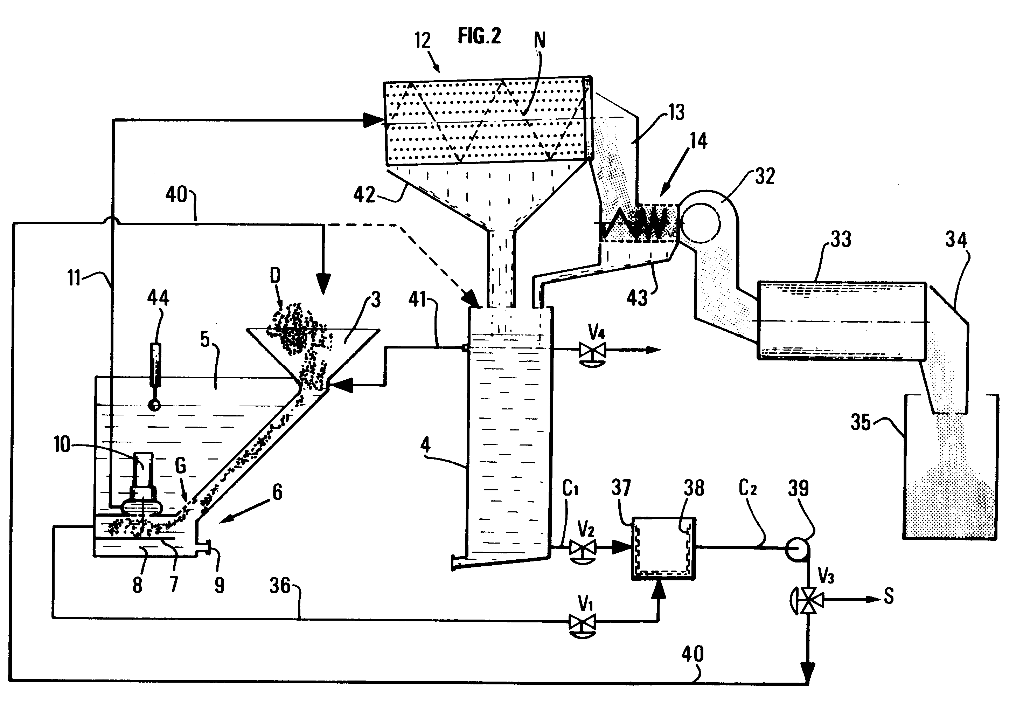

Le dispositif se présente (Fig.1 et 2) sous la forme d'une structure monobloc délimitée par une cage rigide 1. Des boucles d'accrochage 2 solidaires de la cage, permettent de déplacer facilement le dispositif ou de le transporter vers un lieu d'accumulation de déchets plastiques à traiter.

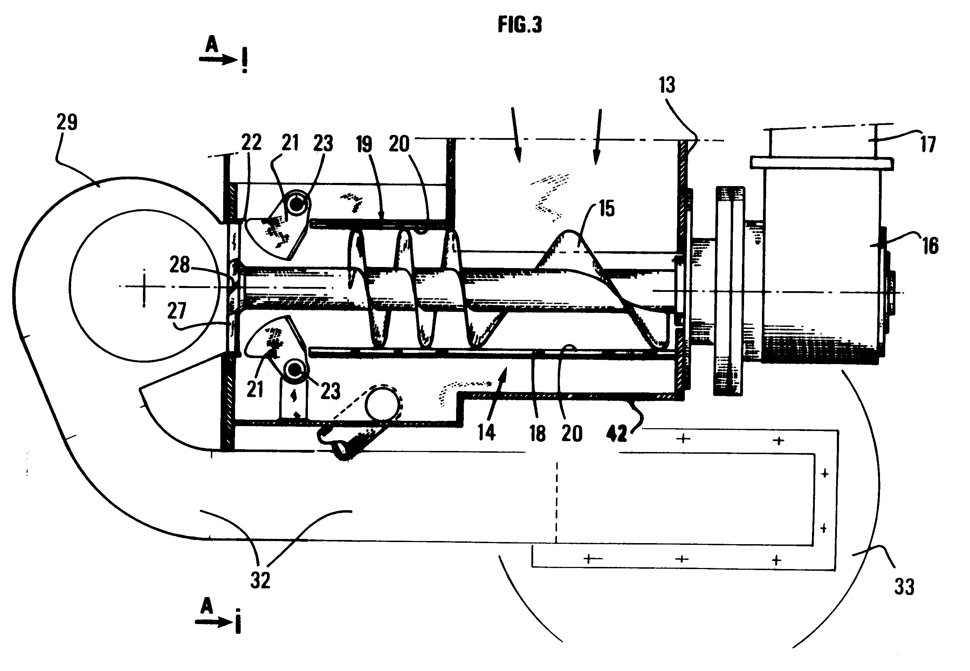

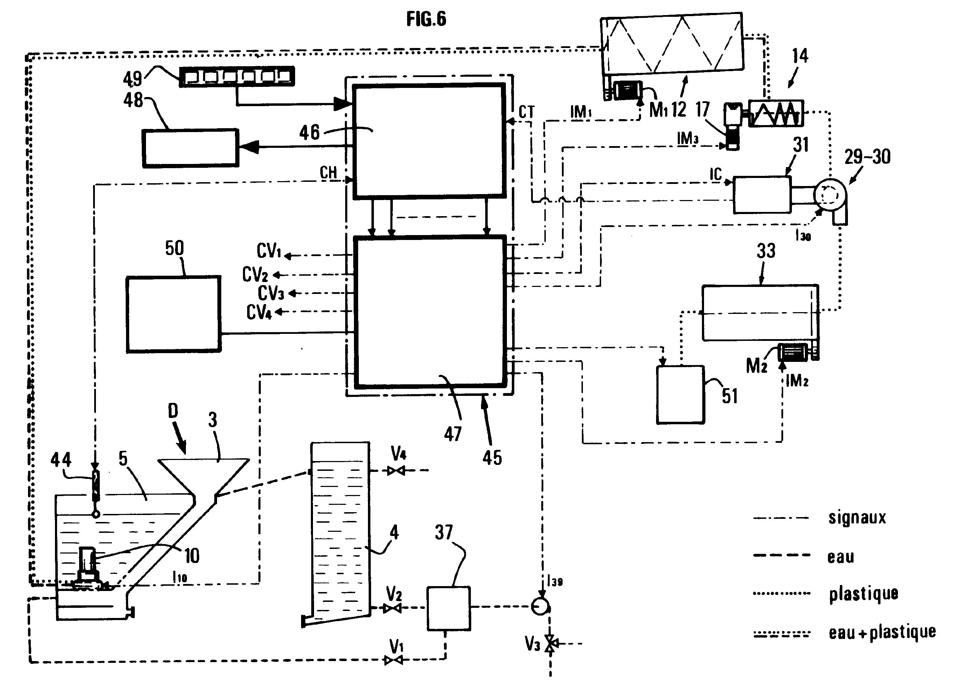

Les déchets D à traiter sont introduits dans une trémie 3. Un courant d'eau issu d'un réservoir 4 (Fig.2) les entraine vers le fond d'une cuve 5 contenant de l'eau. Dans la partie basse 6 de la cuve 5, une plaque 7 délimite un espace 8 où tombent les particules lourdes qui peuvent se trouver mêlées aux déchets plastiques. L'évacuation de ces particules peut être faite durant les interruptions des cycles de traitement par une ouverture latérale 9. Une pompe 10 est immergée dans la cuve avec son ouverture d'aspiration dirigée vers le bas. L'agitation provoquée dans la partie basse 6 par l'aspiration de la pompe 10 a pour effet de séparer les déchets plastiques des souillures ou substances diverses qui y sont mêlées. Les déchets aspirés par la pompe 10 sont refoulés par une tuyauterie 11 vers une première extrémité 12a d'un tambour d'égouttage 12 percé d'orifices sur toute sa surface périphérique. Le tambour 12 est entraîné en rotation par un moteur M1 (Fig.6). Une nervure hélicoïdale N peut être fixée à la paroi intérieure du tambour 12 pour faciliter l'entraînement des déchets plastiques égouttés vers son extrémité opposée 12B. Les déchets égouttés évacués du tambour 12 à l'extrémité 12b, sont amenés par un conduit incliné 13 vers des moyens d'assèchement 14 représentés à la Fig.3.

Les moyens d'assèchement 14 comportent une vis presseuse 15 solidaire à une première extrémité de l'axe de sortie d'un moto-réducteur 16 lequel est entraîné en rotation par un moteur électrique 17 (fig.1). Cette vis 15 tourne dans un carter collecteur 18 raccordé au conduit d'amenée 13. On utilise par exemple une vis presseuse à pas variable plus grand du côté de la première extrémité, là où débouche le conduit 13 amenant les déchets égouttés. Vers son extrémité opposée où le pas est plus faible, la vis est engagée dans un canal d'accumulation 19 prolongeant le carter 18 et dont la section est voisine de celle de la vis presseuse 15. La paroi périphérique du canal d'accumulation est pourvue de perforations permettant l'évacuation du liquide chassé par la vis 15. Des barrettes 20 (Fig. 3, 5) sont fixées aux parois du carter 18 et du canal d'accumulation 19 parallèlement à l'axe de rotation de la vis 15, de manière à empêcher les déchets plastiques de tourner avec la vis et ainsi d'améliorer l'effet de compression provoqué par sa rotation.

Les moyens d'assèchement comportent en outre au moins une pièce de freinage 21 faisant partiellement obstacle à la progression des déchets dans le canal d'accumulation. Chaque pièce de freinage peut être mobile. On utilise par exemple deux pièces de freinage constituées de deux cames pouvant pénétrer dans le canal d'accumulation par des ouvertures radiales 22 ménagées dans sa paroi latérale. Les deux cames 21 sont montées pivotantes. Elles sont solidaires en rotation de deux axes 23. A chacun d'eux est fixé un bras 24 auquel est attaché l'extrémité d'un ressort 25 disposé de manière à exercer sur chacune des cames 21 une force tendant à la faire basculer vers l'intérieur du canal d'accumulation 19 et ainsi gêner la progression des déchets plastiques. Des moyens de tarage 26 sont associés à chacun des ressorts 25 pour régler l'intensité du couple de freinage exercé sur les cames. Au tout début du cycle de traitement, quand le canal d'accumulation 19 est vide, les cames y sont engagées au maximum ce qui facilite la formation initiale dans celui-ci d'un bouchon de déchets et augmente la force de compression exercée par la vis. L'utilisation de ressorts tarés 25, 26 permet d'obtenir une régulation automatique de la force de freinage appliquée par les cames. On obtient ainsi une qualité d'assèchement constante et on évite les risques de panne dus à une obstruction complète du canal 19.

Le dispositif comporte aussi des moyens diviseurs pour désagréger les déchets comprimés sortant du canal 19. Ces moyens diviseurs comportent par exemple un croisillon 27 fixé en bout de L'axe de la vis presseuse 15. Le croisillon 27 porte plusieurs couteaux 28 inclinés par rapport à la direction d'avancement des déchets comprimés. En tournant, les couteaux 28 divisent le bouchon issu du canal d'accumulation 19.

Le dispositif comporte également des moyens pneumatiques pour parfaire l'assèchement des déchets. Ces moyens comportent un ventilateur 29 entraîné en rotation par un moteur électrique 30. le ventilateur aspire de l'air chauffé par des moyens de chauffage tels qu'une batterie 31 de résistances électriques. La sortie du ventilateur 29 est reliée à une gaîne 32 dans laquelle débouche la sortie du canal d'accumulation 19. Les déchets désagrégés sont soufflés par la gaîne 32 vers une première extrémité d'un tambour de séchage 33 entraîné en rotation par un moteur M2 (Fig.6). Les déchets parfaitement séchés sont récoltés à la sortie du tambour 33 à son extrémité opposée. Une trémie 34 (Fig.2) peut être installée entre la sortie du tambour 33 et un bac de collecte 35.

A l'autre extrémité du circuit, la trémie d'entrée 3 peut être alimentée au moyen par exemple d'un tapis roulant (non représenté). Quand les déchets plastiques à traiter ont des dimensions trop grandes, on les fait passer dans un pré-broyeur 50 (cf. fig. 6) d'un type connu placé en amont du dispositif.

Sur le schéma des circulations de la Fig.2, on voit que la partie basse de la cuve 5 est reliée par une tuyauterie 36 (cf. Fig 1) et par l'intermédiaire d'une vanne V1, à un bac 37 de filtrage et décantation des effluents, séparés des déchets plastiques par l'agitation de la pompe 10. Le bac 37 comporte un filtre 38. On voit aussi que le bac 37 communique d'une part avec le réservoir 4 par une canalisation C1 munie d'une vanne de commande V2, et d'autre part avec une pompe de relevage 39 par une canalisation C2. Une canalisation 40 munie d'une vanne V3 (cf. aussi Fig.1), contrôle la communication entre la pompe 39 et la trémie de chargement 3.

Le bac de filtrage et de décantation 37 peut être remplacé par tout autre dispositif de traitement de liquide le mieux adapté pour séparer du liquide certaines substances spécifiques à récupérer.

Suivant une variante représentée en pointillé sur le schéma, la canalisation 40 fait communiquer la pompe de relevage 39 directement avec le réservoir 4. Le liquide du réservoir 4 servant à l'entraînement des déchets déversés dans la trémie d'entrée 3, parvient à celle-ci par un canal 41. Des réceptacles 42, 43 sont disposés respectivement sous le tambour d'égouttage 12 et le carter de la vis presseuse 15. Le liquide recueilli est dirigé vers le réservoir 4.

Le liquide néccessaire pour remplir les circuits du dispositif ou pour compléter leur remplissage, est admis par l'intermédiaire d'une vanne V4 connectée à une source extérieure non représentée.

Une grille G fait communiquer la cuve 5 avec la rampe descendant de la trémie de chargement 3. Le volume de liquide contenu dans la cuve 5 sert de volume tampon pour éviter que la pompe de lavage 10 ne vienne à se désamorcer en raison d'un débit d'eau insuffisant lui parvenant par la rampe.

Le dispositif comporte aussi des moyens de régulation du volume de liquide en circulation, qui agit d'après les données fournies par un indicateur de niveau 44 (Fig. 6). Celui-ci est disposé de préférence dans la cuve tampon 5 plutôt que dans le réservoir 4 de plus grand volume, car les variations de niveau y sont plus rapides et peuvent être plus facilement être prises en compte. L'indicateur de niveau 44 peut cependant être disposé à tout autre emplacement des circuits de liquide.

La quantité totale de liquide employée est relativement faible ce qui est favorable notamment dans tous les cas où l'on veut récupérer certaines substances qui y sont mêlées et qui ont été détachées des déchets plastiques par le lavage.

L'ensemble de commande représenté schématiquement à la Fig.6 comporte un automate programmable 45 constitué d'un processeur de traitement 46 associé à des moyens d'affichage 48 et à un pupitre de commande 49 à touches, et d'un bloc d'alimentation électrique 47. Le processeur de traitement 46 reçoit les signaux de mesure CH de la jauge 44 dans le cuve-tampon 5 et les signaux de mesure CT produits par une sonde de température dans les moyens de chauffage 31.

Il est relié aussi à des détecteurs d'état disposés en différents emplacements du dispositif pour détecter des anomalies de fonctionnement.

Ces détecteurs quine sont pas représentés sur les schémas, sont constitués par exemple:
- de capsules ipsothermiques sur les différents moteurs pour la détection de surchauffes,
- de relais termiques de protection des différents moteurs en cas de surintensité,
- d'un détecteur de colmatage en cas d'accumulation anormale de déchets plastiques dans la trémie 3, et
- d'un ou plusieurs détecteurs signalant l'ouverture de volets ou d'équipements de protection des opérateurs normalement fermés durant le fonctionnement du dispositif.

Le processeur 46 élabore des signaux de commande en respectant une programmation pré-établie et en tenant compte des divers signaux d'état qui lui sont transmis et commande en conséquence le bloc d'alimentation 47. Il transmet aux moyens d'affichage 48 des messages traduisant des anomalies de fonctionnement. L'opérateur peut alors reprendre la main et agir sur le sous-ensemble concerné par l'anomalie au moyen du pupitre de commande 49, de facon à rétablir le fonctionnement normal et redonner ensuite le contrôle du processus à l'automate 45.

Le bloc d'alimentation est relié aux moteurs électriques des pompes, des tambours et aux moyens de commande des électro-vannes. Il engendre:
- Les signaux CV1, CV2, CV3 et CV4 des électro-vannes V1 à V4.
- Les courants IM1, IM2 et IM3 permettant respectivement l'entraînement du tambour d'égouttage 12, du tambour de séchage 33 et de la vis presseuse 15,
- Les courants I10, I30 et I39 pour L'entraînement des pompes 10, 39 et du ventilateur 30; et
- le courant d'alimentation du bloc de résistances de chauffage 31.

Le bloc d'alimentation 47 comporte aussi des sorties pour des alimentations auxiliaires où peuvent être connectés des équipements placés en amont ou en aval du dispositif dans le processus de traitement des déchets plastiques. A l'amont, on peut utiliser un moyen de broyage 50 (Fig.6) pour réduire si besoin est, la taille des déchets à pré-traiter. On peut compléter le dispositif en aval par un moyen de traitement 51 des effluents séparés des déchets par le cycle lavage ou séparation effectué par le dispositif.

Le cycle de fonctionnement commandé par l'automate comporte les étapes successives suivantes :

### 1 - Mise en route comprenant nécessairement dans l'ordre

1.1 - une phase d'initialisation avec un contrôle et une mise à niveau éventuelle du liquide dans les circuits ainsi qu'une mise en route des moyens de chauffage 31 jusqu'à obtenir une température de fonctionnement déterminée et, une fois cette phase achevée,
1.2 - une mise en production qui comporte l'activation en séquence,
   a) du ventilateur 29,
   b) du tambour de séchage 33,
   c) des moyens d'assèchement 14,
   d) du tambour d'égouttage 12,
   e) de la pompe de circulation 10,
   f) d'un moyen de chargement des déchets à traiter dans la trémie 3 (tel qu'un tapis roulant éventuel),
   g) d'un moyen de pré-broyage 50 éventuel placé en amont, et
   h) d'un moyen éventuel de traitement des effluents séparés des déchets plastiques par le lavage.

### 2 - En cours de cycle, l'automate :

2.1 - contrôle une boucle de régulation du chauffage par les moyens de chauffage 31 en fonction des signaux CT produits par la sonde de température;
2.2 - contrôle une boucle de régulation de la quantité de liquide dans les circuits à partir des signaux fournis par la sonde 44 dans le réservoir 5 et par action sur la vanne V4;
2.3 - surveille les puissances électriques consommées par les moteurs et les résistances de chauffage des moyens 31; et
2.4 - contrôle le bon fonctionnement des équipements, d'après les signaux qui lui sont délivrés par les détecteurs d'état mentionnés précédemment. En particulier il surveille les dépassements de valeurs-seuils et la durée des dépassements éventuels.

Les contrôles sont faits en continu. Suivant l'anomalie constatée, le dispositif est arrêté et un message d'erreur est affiché sur l'écran d'affichage 48.

### 3 - Etape d'arrêt

3.1 - Dans le cas d'un arrêt de production, les différents éléments sont arrêtés dans l'ordre inverse de leur mise en route (cf. phase 1.2)
3.2 - Dans le cas d'un arrêt complet, qui ne peut intervenir qu'après la phase d'arrêt de production, les moyens de chauffage et de régulation du niveau de liquide sont stoppés.
3.3 - Dans le cas d'un arrêt d'urgence, tous les éléments du dispositif sont arrêtés immédiatement.

### 4 - Fonctionnement en mode test

Suivant ce mode, l'opérateur peut commander séparément chaque élément du dispositif par l'intermédiaire du pupitre de commande 49, l'automate 45 conservant la gestion des sécurités de fonctionnement.

Le mode de réalisation qui a été décrit comporte un tambour d'égouttage pour ôter la plus grande partie de l'eau de lavage. On ne sortirait toutefois pas du cadre de l'invention en supprimant ce tambour d'égouttage et en remplaçant la vis presseuse décrite par une modèle allongé qui peut remplir à la fois les fonctions d'égouttage et d'assèchement.

On ne sortirait pas non plus du cadre de l'invention si on utilisait une vis presseuse à pas constant à la place de la vis à pas variable du mode de réalisation décrit.

On ne sortirait pas non plus du cadre de l'invention en remplaçant l'eau circulant dans le dispositif par un liquide de lavage quelconque ou en ajoutant à l'eau des additifs particuliers, des détergents ou des anti-moussants par exemple.

De la même façon, on ne sortirait pas du cadre de l'invention en remplaçant les moyens d'assèchement à air chaud par des moyens délivrant de l'air sec.

## Revendications

1. Dispositif de pré-traitement de déchets plastiques adapté à délivrer des déchets lavés et séchés en vue de leur recyclage comportant :
- une cuve (5) remplie de liquide dans laquelle sont introduits les déchets plastiques à traiter,
- des moyens de pompage incluant une pompe de lavage (10), et
- un système séparateur communiquant avec la pompe de lavage, pour séparer du liquide les déchets lavés, incluant un tambour d'égouttage (12), caractérisé en ce qu'il comporte
- des moyens d'assèchement par compression comprenant une vis presseuse (15) entraînée en rotation cette vis étant disposée le long d'un canal d'accumulation de section sensiblement constante, et au moins une pièce (21) de freinage des déchets qui est engagée dans le canal d'accumulation (19) par une ouverture radiale (22) ménagée dans la paroi de celui-ci, ladite pièce de freinage étant associée à un moyen élastique réglable (25,26) adapté à exercer sur elle une force régulée de façon à varier la section de passage des déchets dans le canal d'accumulation et ajuster ainsi la force de compression exercée sur les déchets.

2. Dispositif selon la revendication 1, caractérisé en ce qu'il comporte en outre des moyens diviseurs (27) pour désagréger les déchets issus des moyens d'assèchement.

3. Dispositif selon la revendication 2, caractérisé en ce que les moyens (27) pour désagréger les déchets issus des moyens d'assèchement comportent au moins un couteau (28) solidaire en rotation de la vis presseuse.

4. Dispositif selon l'une des revendications 1 ou 2, caractérisé en ce que la vis presseuse (15) est à pas variable, le pas étant plus grand du côté de l'entrée de la vis que vers ladite pièce mobile de freinage.

5. Dispositif selon l'une des revendications 2 ou 3, caractérisé en ce qu'il comporte des moyens pneumatiques de séchage (29-31) recueillant les déchets issus des moyens diviseurs.

6. Dispositif selon l'une des revendications précédentes, caractérisé en ce qu'il comporte un réservoir (4) contenant du liquide et des moyens d'introduction des déchets dans la cuve comprenant une trémie de chargement (3) et un conduit communiquant avec la base de la cuve (5), une voie de communication entre le réservoir (4) et la trémie (3) permettant l'entraînement par le liquide des déchets.

7. Dispositif selon l'une des revendications précédentes, caractérisé en ce qu'il comporte des réceptacles (42, 43) pour canaliser le liquide sortant du système séparateur.

8. Dispositif selon l'une des revendications précédentes, caractérisé en ce que le canal d'accumulation est pourvu d'éléments saillants (20) disposés parallèlement à son axe pour empêcher la rotation des déchets accumulés.

9. Dispositif selon l'une des revendications précédentes, caractérisé en ce qu'il comporte un ensemble (50) de pré-broyage des déchets plastiques et des moyens pour relier ledit ensemble avec la cuve (5) remplie de liquide.

10. Dispositif selon l'une des revendications précédentes, caractérisé en ce qu'il comporte un moyen (37) de traitement du liquide pour séparer du liquide des substances détachées des déchets plastiques par lavage et des moyens de pompage (39) pour recycler le liquide issu du moyen de traitement.

11. Dispositif selon l'une des revendications précédentes, caractérisé en ce qu'il comporte un ensemble de commande (45) programmé pour conduire et contrôler le processus de pré-traitement des déchets.

12. Dispositif selon la revendication précédente, caractérisé en ce que l'ensemble de commande (45) comporte un processeur de traitement (46), un bloc d'alimentation électrique (47) pour délivrer aux moyens de pompage, aux moyens d'égouttage et aux moyens d'assèchement, des courants électriques d'activation, le processeur de traitement (46) étant connecté à un moyen de détection (44) du niveau de liquide, à un capteur de température (CT) associé aux moyens d'assèchement et à des capteurs d'état pour la détection de paramètres de fonctionnement des différents éléments constitutifs du dispositif.

## Patentansprüche

1. Vorrichtung zur Vorbehandlung von Plastikabfällen, die geeignet ist, die Abfälle gewaschen und getrocknet im Hinblick auf ihre Wiederaufbereitung zu liefern, die folgendes umfaßt:
- eine mit Flüssigkeit gefüllte Wanne (5), in die die zu behandelnden Plastikabfälle eingefüllt werden,
- Mittel zum Pumpen einschließlich einer Pumpe zum Waschen (10) und
- ein Trennsystem, das mit der Pumpe zum Waschen in Verbindung steht, um die gewaschenen Abfälle von der Flüssigkeit abzutrennen, einschließlich einer Trommel zum Abtropfen (12), dadurch gekennzeichnet, daß sie folgendes umfaßt:
- Mittel zum Trocknen unter Druck, die eine Schraube zum Zusammenpressen (15) umfassen, die in Rotation gehalten wird und entlang eines Sammelkanals mit ziemlich konstantem Durchmesser angeordnet ist und mindestens ein Teil (21) zum Abbremsen der Abfälle, das in den Sammelkanal (19) durch eine kreisförmige Öffnung (22), die in seiner Wand eingerichtet ist, eingelassen ist, wobei das besagte Teil zum Abbremsen mit einem regulierbarem elastischen Mittel (25, 26) in Verbindung steht, das eine regulierbare Kraft darauf ausübt, um den Duchgangsquerschnitt der Abfälle in dem Sammelkanal zu verändern und die Kompressionskraft, die auf die Abfälle ausgeübt wird, einzustellen.

2. Vorrichtung nach Anspruch 1, dadurch gekennzeichnet, daß sie außerdem Zerteilungsmittel (27) zum Auflockern der Abfälle, die aus dem Mittel zum Trocknen stammen, umfaßt.

3. Vorrichtung nach Anspruch 2, dadurch gekennzeichnet, daß die Mittel (27) zum Auflockem der Abfälle, die aus dem Mittel zum Trocknen stammen, mindestens ein Messer (28) umfassen, das in Rotation an der Schraube zum Zusammenpressen gebunden ist.

4. Vorrichtung nach einem der Ansprüche 1 oder 2, dadurch gekennzeichnet, daß die Schraube zum Zusammenpressen (15) variablen Gang hat, der Gang ist auf der Eingangsseite der Schraube größer als in Richtung auf das besagte bewegliche Mittel zum Abbremsen.

5. Vorrichtung nach einem der Ansprüche 2 oder 3, dadurch gekennzeichnet, daß sie pneumatische Mittel zum Trocknen (29-31) umfaßt, die die von den Zerteilungsmitteln stammenden Abfälle einsammeln.

6. Vorrichtung nach einem der vorherigen Ansprüche, dadurch gekennzeichnet, daß sie einen Vorratsbehälter (4), der eine Flüssigkeit enthält und Mittel zum Einfüllen der Abfälle in die Wanne, die einen Ladetrichter (3) und eine Leitung besitzt, die mit der Basis der Wanne (5) in Verbindung steht, eine Verbindungsleitung zwischen dem Vorratsbehälter (4) und dem Trichter (3), die die Versorgung der Abfälle mit Flüssigkeit erlaubt, umfaßt.

7. Vorrichtung nach einem der vorherigen Ansprüche, dadurch gekennzeichnet, daß sie Sammelbecken (42, 43) umfaßt, um die Flüssigkeit, die das Trennsystem verläßt, aufzufangen.

8. Vorrichtung nach einem der vorherigen Ansprüche, dadurch gekennzeichnet, daß der Sammelkanal für vorspringende Elemente (20) vorgesehen ist, die parallel zu seiner Achse angebracht sind um die Rotation der angehäuften Abfälle zu verhindern.

9. Vorrichtung nach einem der vorherigen Ansprüche, dadurch gekennzeichnet, daß sie einen Komplex (50) zur Vorzerkleinerung der Plastikabfälle und Mittel zum Verbinden des besagten Komplexes mit der flüssigkeitsgefüllten Wanne umfaßt.

10. Vorrichtung nach einem der vorherigen Ansprüche, dadurch gekennzeichnet, daß sie ein Mittel (37) zur Behandlung von Flüssigkeit, um von der Flüssigkeit Substanzen, die von den Plastikabfällen während der Wäsche heruntergespült wurden, abzutrennen und Mittel zum Pumpen (39) zum Rückführen der aus dem Mittel zur Behandlung stammenden Flüssigkeit umfaßt.

11. Vorrichtung nach einem der vorherigen Ansprüche, dadurch gekennzeichnet, daß sie eine Einrichtung (45) zur programmierten Steuerung umfaßt, um das Verfahren zur Vorbehandlung von Abfällen zu steuern und zu kontrollieren.

12. Vorrichtung nach dem vorherigen Anspruch, dadurch gekennzeichnet, daß die Einrichtung zur Steuerung einen Verfahrensprozessor (46), einen Block für die elektrische Versorgung (47) umfaßt, um den Mitteln zum Pumpen, den Mitteln zum Abtropfen und den Mitteln zum Trocknen elektrischen Strom zur Arbeit zu liefern, der Verfahrensprozessor (46) ist mit einem Mittel zur Detektion des Flüssigkeitsstandes (44), mit einem Temperaturfühler (CT), der zu den Mitteln zum Trocknen gehört und mit Zustandsfühlern zur Detektion der Betriebsparameter der verschiedenen wesentlichen Bestandteile der Vorrichtung verbunden.

## Claims

1. A device for pre-treating plastics waste designed to produce washed and dried waste for recycling, comprising :
- a tank (5) filled with liquid into which the plastics waste to be treated is introduced,
- pumping means including a washing pump (10), and
- a separating system communicating with the washing pump for separating the liquid from the washed waste, including a draining drum (12), characterised in that it comprises
- means for de-watering by compression comprising a screw-press (15) driven in rotation, this screw being located along a collecting channel of a substantially constant section, and at least one part (21) for braking the waste, which is engaged in the collecting channel (19) by means of a radial opening (22) arranged in the wall of the channel, the braking part being associated with a regulable elastic means (25, 26) designed to apply to it a force that is regulated so as to vary the section of the passage through which the waste passes in the collecting channel and thereby adjust the compression force applied to the waste.

2. A device in accordance with claim 1, characterised in that it also has separating means (27) for splitting up the waste coming from the de-watering means.

3. A device in accordance with claim 2, characterised in that the means (27) for splitting the waste from the de-watering means comprises at least one cutter (28) integral with the screw-press in rotation.

4. A device in accordance with one of claims 1 or 2, characterised in that the screw-press (15) is of variable pitch, the pitch at the inlet of the screw being bigger than the pitch at the end where the mobile braking part is situated.

5. A device in accordance with one of claims 2 or 3, characterised in that it has pneumatic drying means (29-31) collecting the waste from the separating means.

6. A device in accordance with one of the previous claims, characterised in that it has a reservoir (4) containing liquid and means for introducing the waste into the tank comprising a loading hopper (3) and a duct communicating with the base of the tank (5), a communication channel between the reservoir (4) and the hopper (3) allowing the waste to be moved along by the liquid.

7. A device in accordance with one of the previous claims, characterised in that it has receptacles (42, 43) for channelling the liquid coming out of the separating system.

8. A device in accordance with one of the previous claims, characterised in that the collecting channel is provided with salient elements (20) arranged parallel to its axis to prevent the accumulated waste from rotating.

9. A device in accordance with one of the previous claims, characterised in that it has a unit (50) for pre-crushing the plastics waste and means for connecting the unit to the tank (5) filled with liquid.

10. A device in accordance with one of the previous claims, characterised in that it has a liquid processing means (37) for separating from the liquid any substances that have been detached from the plastics waste by washing and pumping means (39) to recycle the liquid leaving the treatment means.

11. A device in accordance with one of the previous claims, characterised in that it has a control unit (45) programmed to drive and control the waste pre-treatment process.

12. A device in accordance with the previous claim, characterised in that the control unit (45) has a treatment processor (46), an electric power pack (47) to supply electric activation current to the pumping means, draining means and drying means, the treatment processor (46) being connected to a means (44) for monitoring the liquid level, a temperature sensor (CT) associated with the drying means and status sensors for monitoring the operating parameters of the various elements making up the device.
